# EUROPEAN PATENT APPLICATION

(11) **EP 4 183 744 A1**
(43) Date of publication of application: **24.05.2023**
(21) Application number: 21842566.8
(22) Date of filing: 04.06.2021
(51) Int. Cl.: C01B 33/16, F16L 59/02

(54) **HYBRID AEROGEL, PRODUCTION METHOD FOR SAME, AND HEAT INSULATION MATERIAL USING HYBRID AEROGEL**

(30) Priority: 14.07.2020 JP 2020120921
(71) Applicant: National Institute for Materials Science, Tsukuba-shi, Ibaraki 305-0047 (JP)
(72) Inventor: WU Rudder, Tsukuba-shi, Ibaraki 305-0047 (JP); LEE Kuan-I, Tsukuba-shi, Ibaraki 305-0047 (JP); VIRTUDAZO V.Rivera Raymond, Tsukuba-shi, Ibaraki 305-0047 (JP)
(74) Representative: Plougmann Vingtoft a/s
(86) International application number: PCT/JP2021/021299
(87) International publication number: WO 2022/014194

(57) **Abstract**

The hybrid aerogel of the present invention includes an aerogel having a network structure created by bonded secondary particles of a metal oxide with pores formed among the secondary particles; and nano-size hollow particles of 30 nm or more and 360 nm or less in outer diameter and mixed into the aerogel. Gas flow paths formed by the communication of the pores in the aerogel are blocked by the shells of the nano-size hollow particles. Provided is a solid thermal insulation material with highly thermal insulation performance comparable to vacuum insulation and not collapsing even when atmospheric pressure acts thereon.

## Description

### TECHNICAL FIELD

The present invention relates to a hybrid aerogel and a method for producing the same.

The present invention also relates to a thermal insulation material using a hybrid aerogel.

### Background Art

An aerogel is a material first published in 1931 (see NPL 1) and is generally defined as a porous material produced by replacing liquid content in a wet gel with gas by supercritical drying or atmospheric pressure drying while causing substantially no shrinkage (see NPL 2 and NPL 3). Methods for producing an aerogel are described in, for example, PTL 1 and PTL 2. Silicon dioxide is generally synthesized in a sol-gel process or a Stober process. As described in PTL 3 and PTL 4, for example, an aerogel is used as a thermal insulation material when placed between laminates.

Since an aerogel has the lowest thermal conductivity among other self-supporting solids, potential application thereof to thermal insulation materials has been studied (see PTL 3 and PTL 4, for example). To provide specific numerical values, while general thermal insulation materials have thermal conductivity of approximately 20 mW/(m·K) to 45 mW/(m·K), aerogels are often reported to have lower thermal conductivity, which means to have higher thermal insulation performance. Such extremely low thermal conductivity that is highly desirable for thermal insulation materials can be achieved as follows: in an aerogel structure, an aerogel skeleton partitions the space uniformly to form pores, so that neither gas convection nor thermal momentum exchange of molecules occurs inside the aerogel. The mean free path of nitrogen molecules, which is a main component of the atmosphere, at ambient temperature and pressure is approximately 70 nm (or 68 nm). This means that thermal insulation performance comparable to vacuum insulation can be achieved by partitioning the inside of an aerogel into spaces smaller than the mean free path of nitrogen molecules.

While aerogels are materials of extremely low density, putting them to practical use have involved difficulties due to their weakness, vulnerability and breakability. Therefore, mechanically strong novel aerogels are needed in engineering applications such as highly thermal insulation windows, novel filters, ultra-thin walls for refrigerators, and highly thermal insulation materials for buildings. To attain above goal, hybridized aerogels reinforced with fibers or other organic molecules have been studied, but one with sufficient properties has not yet to be achieved.

### CITATION LIST

### Patent Document

PTL 1: USP4402927
PTL 2: Japanese Patent Application Laid-Open No. 2019-19019
PTL 3: Japanese Patent Application Laid-Open No. 2018-130933
PTL 4: Japanese Patent Application Laid-Open No. 2009-299893

### Non-Patent Document

NPL 1: S.S. Kistler, "Nature," 127, 741 (1931)
NPL 2: Shigeto Kataoka. et.al. "Ultimate Porous Material: Silica Aerogel," Annual Report, Advanced Ceramics Research Center, Nagoya Institute of Technology 2, pp.13-17 (2013)
NPL 3: Makoto Tabata. "Development and Application of Aerogel." High Energy News 38, pp.124-134 (2020) http://www.jahep.org/hepnews/2019/19-4-3-aerogel.pdf

### SUMMARY OF THE INVENTION

### Problems to be Solved by the Invention

An objective of the present invention is to provide a mechanically strong, highly thermal insulation, and practically usable hybrid gel made from an extremely low density material.

An objective of the present invention is to provide a highly thermal insulation aerogel. More particularly, an objective of the invention is to provide a hybridized aerogel having a high porosity, and having a structure for further controlling gas flows through the pores.

### Means for Solving Problems

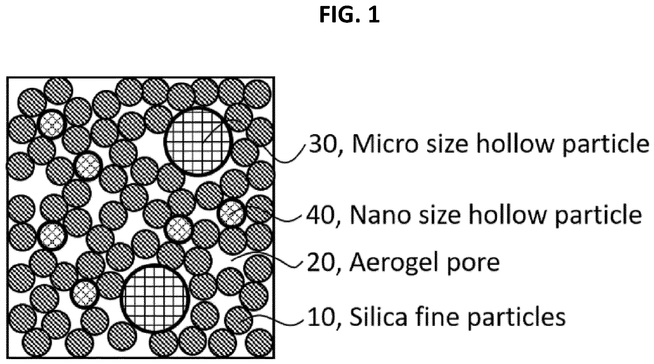

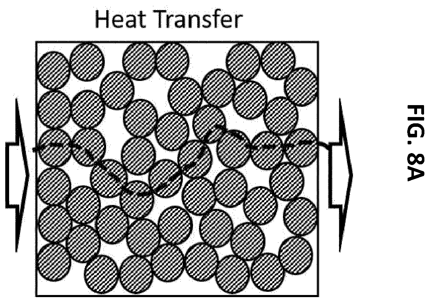

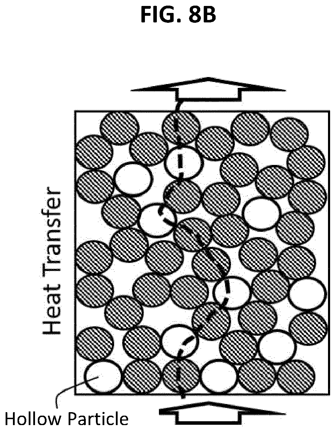

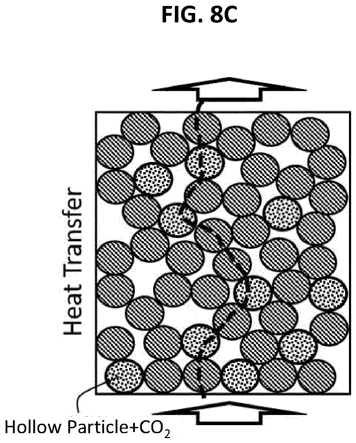

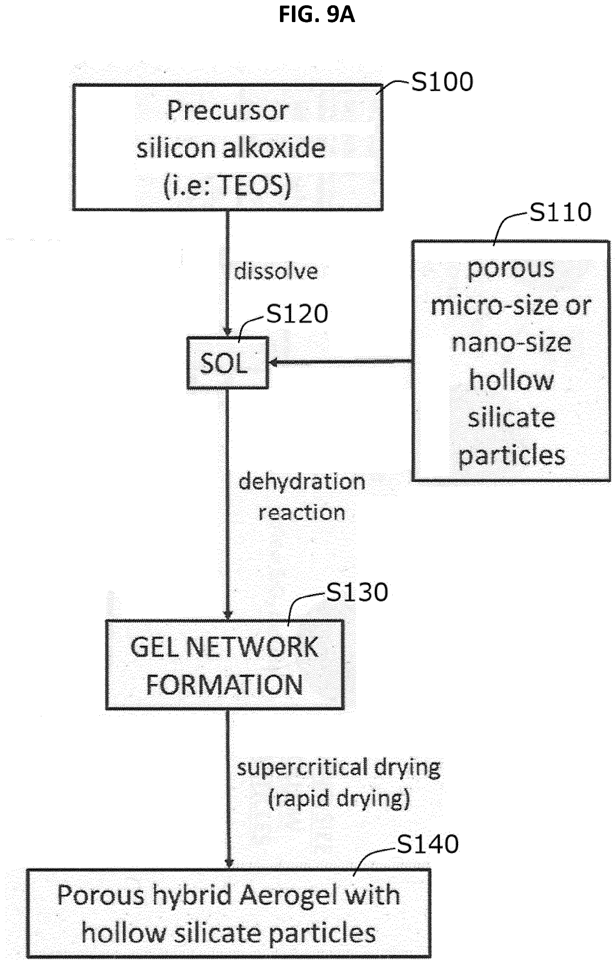

As expected from the process of producing an aerogel, individual pores in an aerogel are connected with each other, causing slight gas flows within the aerogel. The present inventors have focused on heat transfer caused by the slight gas flows, and conceived an idea that it would be possible to further lower thermal conductivity of an aerogel by producing a hybridized aerogel in which other materials for blocking or reducing gas flows are mixed.
[1] The hybrid aerogel of the invention comprises, as illustrated in FIG. 1 for example, an aerogel having a network structure created by bonded secondary particles of a metal oxide with pores formed among the secondary particles, and nano-size hollow particles of 30 nm or more and 360 nm or less in outer diameter and mixed into the aerogel. Gas flow paths formed by the communication of the pores in the aerogel are blocked by the shells of the nano-size hollow particles.
[2] In the hybrid aerogel of the invention, preferably, the nano-size hollow particles may be 0.01% by weight or more and 30% by weight or less, and the balance may consist of the aerogel.
[3] In the hybrid aerogel of the invention, preferably, gas flow paths blocked by the shells of the nano-size hollow particles may be 10% or more and 90% or less with respect to the gas flow paths formed by the communication of the pores of the aerogel.
[4] The hybrid aerogel of the invention includes, as illustrated in FIG. 1 for example, an aerogel having a network structure created by bonded secondary particles of a metal oxide with pores formed among the secondary particles, and micro-size hollow particles of 1 µm or more and 23 µm or less in outer diameter and mixed into the aerogel. The network structure of the aerogel is mechanically reinforced by the spherical shells of the micro-size hollow particles.
[5] In the hybrid aerogel of the invention, preferably, the micro-size hollow particles may be 0.01% by weight or more and 30% by weight or less, and the balance may consist of the aerogel.
[6] The hybrid aerogel of the invention includes: as illustrated in FIGS. 1, 8A, 8B and 8C for example, an aerogel having a network structure created by bonded secondary particles of a metal oxide with pores formed among the secondary particles, and a solid network structure skeleton formed by hollow particles dispersed in the aerogel; gas flow paths formed by the pores communicating in the aerogel; and spherical cavities in the hollow particles filled with gas (Xenon, CO₂ or ethylene) having thermal conductivity lower than that of air.
[7] In the hybrid aerogel [6] of the invention, preferably, the hollow particles may include at least one of nano-size hollow particles of 30 nm or more and 360 nm or less in outer diameter and micro-size hollow particles of 1 µm or more and 23 µm or less in outer diameter.
[8] In the hybrid aerogel [7] of the invention, preferably, the nano-size hollow particles may be 0.01% by weight or more and 30% by weight or less, and the micro-size hollow particles may be 0.01% by weight or more and 30% by weight or less, and the balance may consist of the aerogel. More preferably, the nano-size hollow particles may be 0.1% by weight or more and 15% by weight or less, and the micro-size hollow particles may be 0.1% by weight or more and 15% by weight or less. More preferably, the nano-size hollow particles may be 1% by weight or more and 10% by weight or less, and the micro-size hollow particles may be 1% by weight or more and 10% by weight or less.
[9] In the hybrid aerogel [7] of the invention, preferably, the nano-size hollow particle may be 0.00003% by volume or more and 17.6% by volume or less, and the micro-size hollow particle may be 0.00003% by volume or more and 22% by volume or less, and the balance may consist of the aerogel. More preferably, the nano-size hollow particles may be 0.0003% by volume or more and 8.1% by volume or less, and the micro-size hollow particles may be 0.0003% by volume or more and 10.6% by volume or less. More preferably, the nano-size hollow particles may be 0.0034% by volume or more and 5.2% by volume or less, and the micro-size hollow particles may be 0.0034% by volume or more and 7.0% by volume or less.
[10] In the hybrid aerogels [1] to[9] of the invention, preferably, the metal of the metal oxide may be a metal or a combination of metals-selected from the group consisting of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).
[11] The method for producing a hybrid aerogel of the invention comprises: preparing a metal alkoxide as a precursor; preparing hollow particles consisting of a metal oxide; preparing a colloidal solution by dissolving the precursor and the hollow particles in a solvent; preparing a gel by adding an acid catalyst to the colloidal solution to promote a hydrolysis reaction and a polycondensation reaction to the precursor in a sol-gel process; and drying the gel by supercritical drying with carbon dioxide or by atmospheric drying to produce a hybridized aerogel.
[12] In the method for producing a hybrid aerogel of the invention, preferably, the metal of the metal alkoxide may be a metal or a combination of metals selected from the group consisting of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).
[13] The method for producing a hybrid aerogel of the invention includes: as illustrated in FIG. 9A for example, preparing silicon alkoxide or water glass as a precursor (S100); preparing silica hollow particles (S110); preparing a colloidal solution by dissolving the precursor and the hollow particles in a solvent (S120); preparing a gel by adding an acid catalyst to the colloidal solution to promote a hydrolysis reaction and a polycondensation reaction to the precursor in a sol-gel process (S 130); and drying the gel by supercritical drying with carbon dioxide or by atmospheric drying to produce a hybridized aerogel (S140).
[14] In the method for producing a hybrid aerogel of the invention, preferably, at least one of tetraethoxysilane, trimethoxysilane, tetramethoxysilane, triethoxysilane, tripropoxysilane, tetrapropoxysilane and tributoxysilane may be used as the silicon alkoxide.
[15] In the method for producing a hybrid aerogel of the invention, it is desirable to further include replacing the gas inside the spherical cavities of the hollow particles with gas having thermal conductivity lower than that of the atmosphere.
[16] In the method for producing a hybrid aerogel of the invention, preferably, the hollow particles may be one of micro-size hollow particles, nano-size hollow particles, and a mixture of micro-size hollow particles and nano-size hollow particles.
[17] The thermal insulation material of the invention uses the hybrid aerogel according to any one of [1] to[10].

### Effect of the Invention

According to the hybrid aerogel of the invention, it is possible to provide a solid thermal insulation material with highly thermal insulation performance comparable to vacuum insulation and not collapsing even when atmospheric pressure acts thereon.

### BRIEF DESCRIPTION OF THE DRAWINGS

FIG. 1 is a cross-sectional view of a main part of a hybridized aerogel according to an embodiment of the invention, illustrating a conceptual cross-sectional structure.
FIG. 2 is a conceptual view of a cross-sectional structure of a hollow particle illustrated in FIG. 1.
FIG. 3 is a conceptual explanatory view of a micro-size hollow particle according to an embodiment of the invention, where (A) illustrates a cross-sectional structure and (B) is an SEM image of a micro-size hollow particle with a surface fractured to show an internal structure.
FIG. 4A is an explanatory diagram of micro-size hollow particles according to an embodiment of the invention, where (A) is an optical microscope image, (B) is an SEM image, (C) is a magnified SEM image of (B) showing a fractured surface of a micro-size hollow particle, and (D) is a magnified SEM image of (C) showing a detailed membrane structure of a micro-size hollow particle.
FIG. 4B is an explanatory diagram of micro-size hollow particles according to an embodiment of the invention, where (E) is an EDX spectrum showing elemental composition and (F) shows particle size distribution (PSD).
FIG. 5 is a conceptual explanatory view of a nano-size hollow particle according to an embodiment of the invention, where (A) illustrates a cross-sectional structure and (B) is an SEM image showing an internal structure of a nano-size hollow particle.
FIG. 6A is an explanatory view of nano-size hollow particles according to an embodiment of the invention, where (A) is an SEM image, (B) is a TEM image, (C) is a magnified TEM image of (B), and (D) is a magnified TEM image of (C) showing a detailed membrane structure of a nano-size hollow particle.
FIG. 6B is an explanatory diagram of nano-size hollow particle according to an embodiment of the invention, where (E) is an EDX spectrum showing elemental composition and (F) shows particle size distribution (PSD).
FIG. 7 illustrates images of hollow particles and an aerogel according to an embodiment of the invention, where (A) is an SEM image of micro-size hollow particles, (B) is a TEM image of nano-size hollow particles, (C) is an SEM image of a porous aerogel, and (D) is a magnified SEM image of (C) showing a detailed structure of a porous aerogel.
FIG. 8A illustrates heat transfer according to an embodiment of the invention, where an aerogel includes no hollow particle.
FIG. 8B illustrates heat transfer according to an embodiment of the invention, where a hybridized aerogel includes nano-size hollow particles.
FIG. 8C illustrates heat transfer according to an embodiment of the invention, where a hybridized aerogel includes CO₂-filled nano-size hollow particles.
FIG. 9A is a diagram illustrating a process for producing a hybridized aerogel.
FIG. 9B is a diagram illustrating a hydrolysis reaction and a polycondensation reaction to a precursor in a sol-gel process.
FIG. 10 is a diagram illustrating a process for producing micro-size hollow particles by a double emulsion method.
FIG. 11 is a diagram illustrating a process for producing nano-size hollow particles by a soft-template method.
FIG. 12A is a diagram illustrating zeta potential of nano-size hollow particles according to an embodiment of the invention.
FIG. 12B is a diagram illustrating particle size distribution (PSD) of nano-size hollow particles according to an embodiment of the invention.
FIG. 12C is an EDX spectrum showing elemental composition of nano-size hollow particles according to an embodiment of the invention.
FIG. 13 shows comparison in thermal conductivity of the hybridized aerogel according to an embodiment of the invention in four aspects: an aerogel alone; a mixture of an aerogel and micro-size hollow particles; a mixture of an aerogel and nano-size hollow particles with the gas inside the nano-size hollow particles being air; and a mixture of an aerogel and nano-size hollow particles with the gas inside the nano-size hollow particles being CO₂.
FIG. 14 is a conceptual explanatory diagram of a design guideline of a hybridized aerogel according to an embodiment of the invention, where a through pore diameter of an aerogel is plotted on the vertical axis and an inner diameter of hollow particles is plotted on the horizontal axis in a matrix.

### DETAILED DESCRIPTION OF THE INVENTION

The invention will be described below with reference to the drawings.

FIG. 1 is a cross-sectional view of a main part of a hybridized aerogel according to an embodiment of present the invention, illustrating a conceptual cross-sectional structure. In FIG. 1, silica fine particles 10, pores 20 in a network structure (porous structure), micro-size hollow particles (MHSPs) 30, and nano-size hollow particles (NHSPs) 40 are shown.

An aerogel is a general term for a dry gel with low density and high porosity, and is a porous body obtained by drying a wet gel. Silica fine particles 10 are secondary particles (20 nm to 50 nm in diameter) formed by weakly bonded silica primary particles (approximately 1 nm to 2 nm in diameter). The silica fine particles 10 have a network structure created by the bonded silica secondary particles with the pores 20 formed among the secondary particles. The weak bonding strength is strong enough to keep the network structure as a gel skeleton.

The pores 20 of the network structure (porous structure) are typically 5 nm to 100 nm in diameter, and 20 nm to 40 nm in average pore diameter. This means that the network structure of a silica aerogel is very brittle.

The "average pore diameter" is obtained by, for example, acquiring an SEM image with a scanning electron microscope (SEM), obtaining a diameter of each pore through image analysis, and calculating an average radius for 100 or more pores as an arithmetic mean value (image analysis). A pore group forming one aggregated particle is counted as one pore.

The pore diameter of a general silica aerogel made from a silica compound is 67 nm or less, which is the mean free path of air at ambient temperature and pressure, and collision of gas molecules (i.e., heat transfer due to convection) rarely occurs within the pore of that size. Therefore, influences of thermal conductivity due to the gas component can be neglected, and thus the silica aerogel is low in thermal conductivity.

Each of the micro-size hollow particles 30 has a spherical hollow portion surrounded by a shell. As shown in Table 1, the range of the outer diameter D of the micro-size hollow particles 30 is preferably between the lower limit of 1 µm, which is approximately 15 times the mean free path λ of air at ambient temperature and pressure, and the upper limit of 23 µm. It is difficult to synthesize micro-size hollow particles with the outer diameter D of smaller than 1 µm. Besides, the wall thickness of those micro-size hollow particles is so thin that gas like carbon dioxide enclosed therein easily leaks out of the particles. Micro-size hollow particles with the outer diameter D exceeding 23 µm have a low thermal insulation effect, and due to its increased particle surface area, gas like carbon dioxide enclosed therein easily leaks out of the particles.

The range of the wall thickness t forming the shell of the micro-size hollow particles 30 is preferably 0.35 µm to 3 µm, and the range of outer diameter d of the pore (the hollow portion) is preferably 0.3 µm to approximately 22 µm.

The micro-size hollow particles 30 have a particle size larger than 15 times the mean free path of air at ambient temperature and normal pressure. Such particle dimension is effective in enhancing the structural strength of the brittle network structure (porous structure) in a hybridized aerogel.

In the hybrid aerogel of the invention, as shown in Table 1, the composition ratio of the micro-size hollow particles is preferably 0.01% by weight or more and 30% by weight or less, more preferably 0.10% by weight or more and 15% by weight or less, and most preferably 1.0% by weight or more and 10% by weight or less. When represented by % by volume, the composition ratio of the micro-size hollow particles is preferably 0.00003% by volume or more and 22.4% by volume or less, more preferably 0.0003% by volume or more and 10.6% by volume or less, and most preferably 0.0034% by volume or more and 7.0% by volume or less.

If the composition ratio of the micro-size hollow particles is less than 0.01% by weight, the micro-size hollow particles leak out of the solution at the production stage of the hybrid aerogel, resulting in a significantly poor yield. If the composition ratio of the micro-size hollow particles exceeds 30% by weight, it is difficult to disperse the micro-size hollow particles uniformly. This means that synthesis of the micro-size hollow particles is difficult.

**Table 1**

| Composition range definition - micro-size hollow particle | | | | | | |
|---|---|---|---|---|---|---|
| | Optimum range | | Average range | | Wide range | |
| | Min. | Max. | Min. | Max. | Min. | Max. |
| Outer diameter (µm) | 1 | 23 | 1 | 23 | 1 | 23 |
| Shell thickness (µm) | 0.35 | 3 | 0.35 | 3 | 0.35 | 3 |
| Composition ratio of hollow particles (wt%) | 1.00% | 10.00% | 0.10% | 15.00% | 0.01% | 30.00% |
| Composition ratio of hollow particles (vol%) | 0.00337% | 6.96033% | 0.00033% | 10.61984% | 0.00003% | 22.39365% |
| Composition ratio of aerogel (vol%) | 93.03967% | 99.99663% | 89.38016% | 99.99967% | 77.60635% | 99.99997% |

Each of the nano-size hollow particles 40 has a spherical hollow portion surrounded by a shell. As shown in Table 2, the range of the outer diameter D of the nano-size hollow particles 40 is preferably between the lower limit of 30 nm, which is approximately half the mean free path λ of air at ambient temperature and pressure, and the upper limit of 360 nm, which is approximately five times the mean free path λ of air at ambient temperature and pressure. Nano-size hollow particles with the outer diameter D of smaller than 30 nm pass through a filter, are difficult to synthesize, and have so thin wall thickness that gas like carbon dioxide enclosed therein easily leaks out of the particles. Nano-size hollow particles with the outer diameter D exceeding 360 nm are difficult to synthesize because such large dimension exceeds the limit of core particle formation.

The wall thickness t of the shell of the nano-size hollow particle 40 is preferably in the range of 7.5 nm to 65 nm, and the outer diameter d of the pore (hollow portion) is preferably in the range of 15 nm to 345 nm.

Since the particle size of the nano-size hollow particle 40 includes the mean free path of air at ambient temperature and normal pressure, the nano-size hollow particles 40 greatly contribute to the thermal insulation effect of the hybridized aerogel.

In the hybrid aerogel of the invention, as shown in Table 2, the composition ratio of the nano-size hollow particles is preferably 0.01% by weight or more and 30% by weight or less, more preferably 0.10% by weight or more and 15% by weight or less, and most preferably 1.0% by weight or more and 10% by weight or less. When represented by % by volume, the composition ratio of the nano-size hollow particles is preferably 0.00003% by volume or more and 17.6% by volume or less, more preferably 0.0003% by volume or more and 8.1% by volume or less, and most preferably 0.0034% by volume or more and 5.2% by volume or less.

If the composition ratio of the nano-size hollow particles is less than 0.01% by weight, the nano-size hollow particles leak out of the solution at the production stage of the hybrid aerogel, resulting in a significantly poor yield. If the composition ratio of the nano-size hollow particles exceeds 30% by weight, it is difficult to disperse the nano-size hollow particles uniformly. This means that synthesis of the micro-size hollow particles is difficult.

**Table 2**

| Composition range definition - nano-size hollow particle | | | | | | |
|---|---|---|---|---|---|---|
| | Optimum range | | Average range | | Wide range | |
| | Min. | Max. | Min. | Max. | Min. | Max. |
| Outer diameter (nm) | 30 | 360 | 30 | 360 | 30 | 360 |
| Shell thickness (nm) | 7.5 | 65 | 7.5 | 65 | 7.5 | 65 |
| Composition ratio of hollow particles (wt%) | 1.00% | 10.00% | 0.10% | 15.00% | 0.01% | 30.00% |
| Composition ratio of hollow particles (vol%) | 0.00337% | 5.23741% | 0.00033% | 8.06963% | 0.00003% | 17.57197% |
| Composition ratio of aerogel (vol%) | 94.76259% | 99.99663% | 91.63037% | 99.99967% | 82.42803% | 99.99997% |

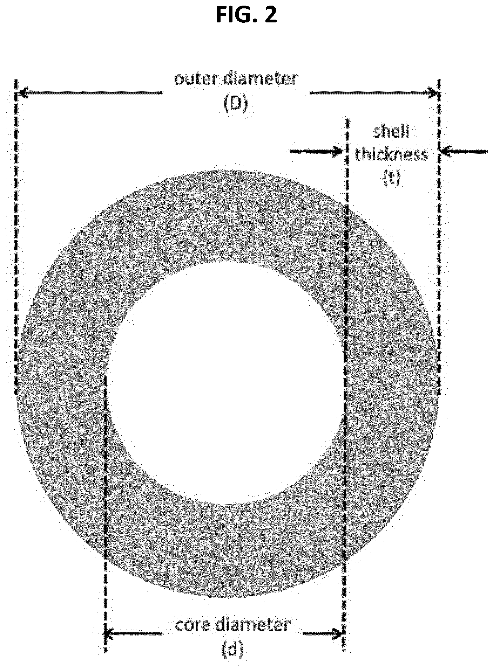

FIG. 2 is a conceptual view of a cross-sectional structure of a hollow particle illustrated in FIG. 1.

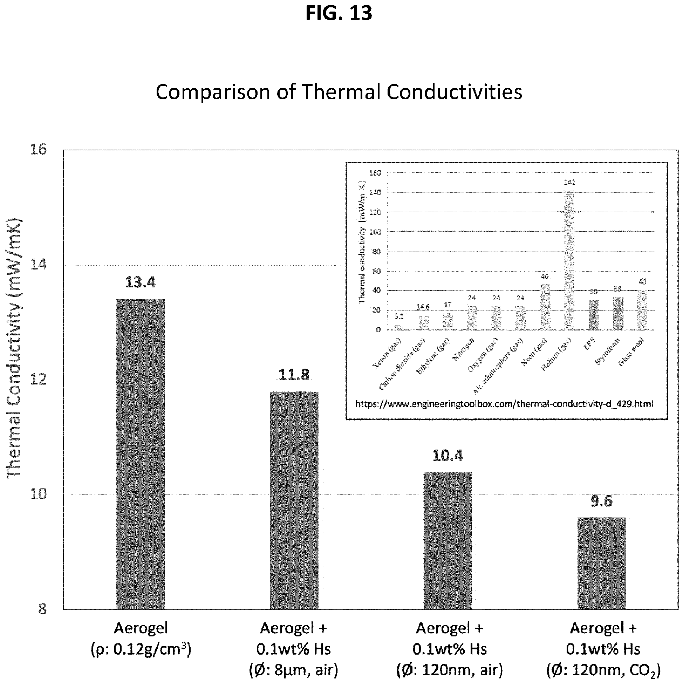

Each of the hollow particles has a spherical hollow portion surrounded by a shell. The hollow particles are desirably shaped as shown in Tables 1 and 2 according to the two particle types: the nano-size hollow particles 40 and the micro-size hollow particles 30. For example, the ranges of the outer diameter D of the hollow particles are 30 nm to 360 nm and 1 µm to 23 µm respectively, the ranges of the shell thickness t are 7.5 nm to 65 nm and 0.35 µm to 3 µm respectively, and the ranges of the diameter d of the core (hollow portion) are 15 nm to 345 nm and 0.3 µm to approximately 22 µm respectively. When a silica aerogel is used as silica fine particles and a silica aerogel is used as hollow particles, by finely adjusting the diameter of the hollow particles, the mixing rate of the hollow particles in the hybridized aerogel, etc., thermal conductivity of the hybridized aerogel can be made much lower than that (approximately 14 mW/m·K) of the silica aerogel, and even made quite close to those (8.0 mW/m·K) of vacuum insulated panels. That is, when air is enclosed in the hollow particles, thermal conductivity as low as 10.4 mW/m·K is achieved, and when carbon dioxide is enclosed in the hollow particles, thermal conductivity as low as 9.6 mW/m·K is achieved (see FIG. 13).

In the invention, the hollow particles are classified into two types: the micro-size hollow particles 30 and the nano-size hollow particles 40.

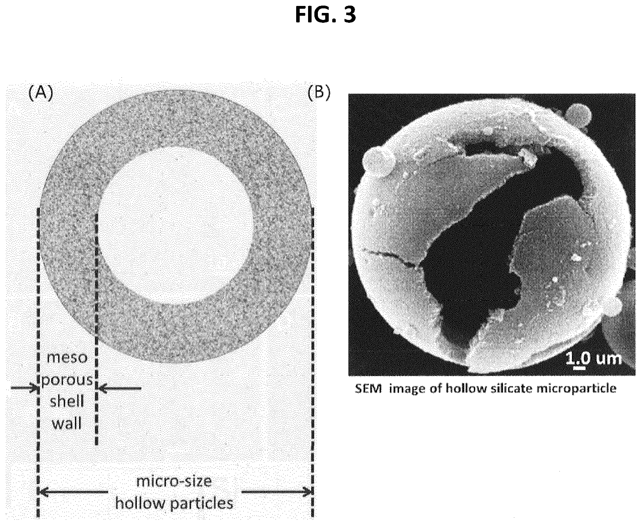

FIG. 3 is a conceptual explanatory view of a micro-size hollow particle according to an embodiment of the invention, where (A) illustrates a cross-sectional structure and (B) is an SEM image of a micro-size hollow particle with a surface fractured to show an internal structure. The micro-size hollow particles have been described as the micro-size hollow particles 30.

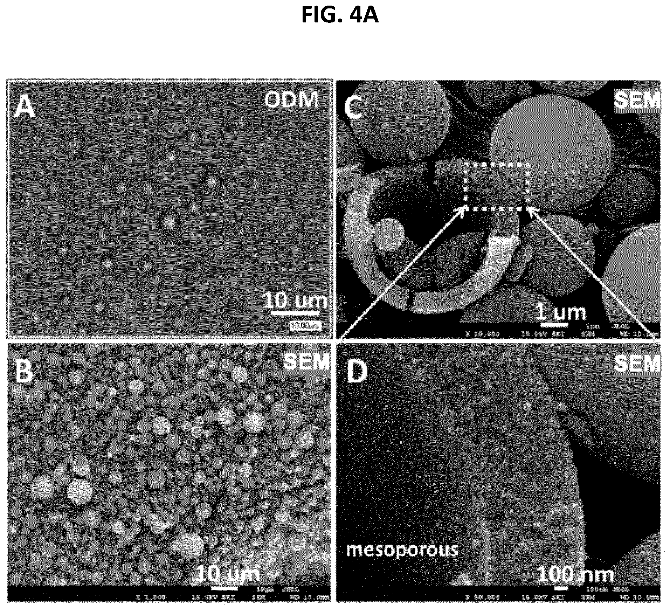

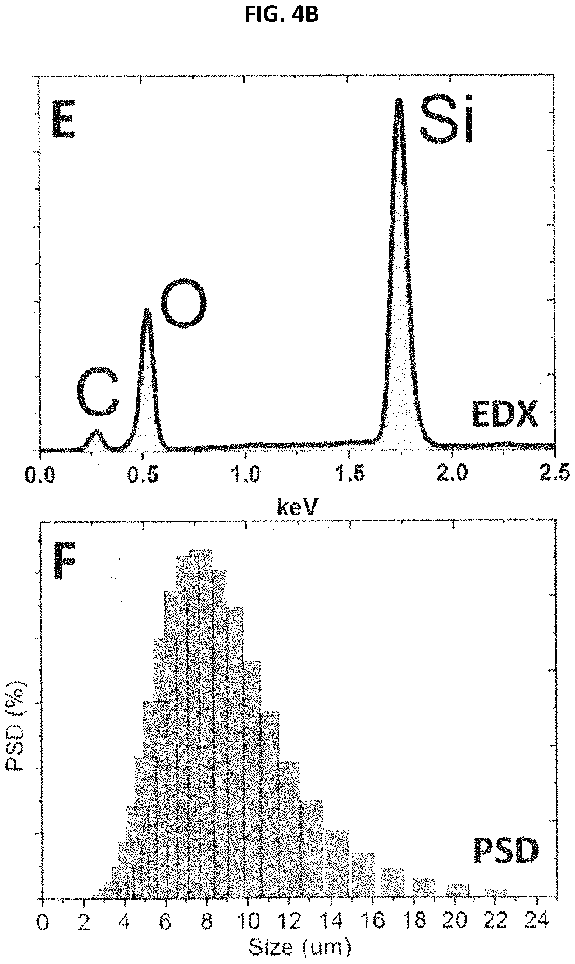

FIG. 4A is an explanatory diagram of the micro-size hollow particles according to an embodiment of the invention, where (A) is an image captured with an optical digital microscope (ODM), (B) is an SEM image, (C) is a magnified SEM image of (B) showing a fractured surface of a micro-size hollow particle, and (D) is a magnified SEM image of (C) showing a detailed membrane structure of a micro-size hollow particle.

FIG. 4B is an explanatory diagram of the micro-size hollow particles according to an embodiment of the invention, where (E) is an energy dispersive X-ray analysis (EDX) spectrum showing elemental composition and (F) shows particle size distribution (PSD). The elemental composition of the micro-size hollow particles are Si as the main component, O and a trace level of C. C is contained due to the carbon coating required for SEM and EDX measurements, which improves conductivity of a sample under analysis. The diameter of the micro-size hollow particle has a peak value of 8 µm and is binomially distributed in the range of 3 µm to 22 µm.

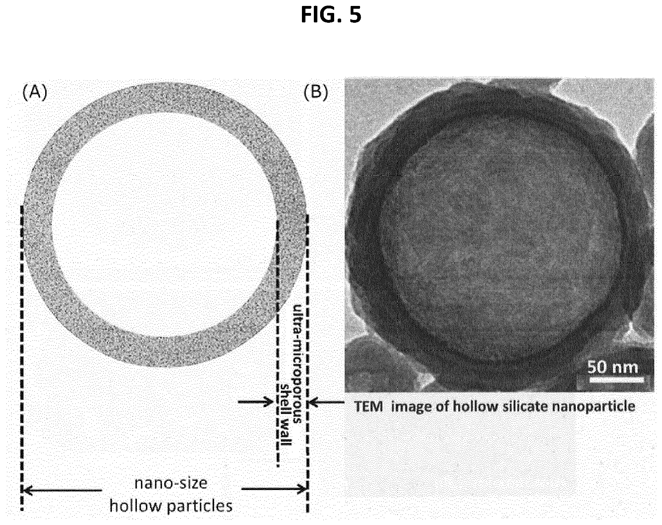

FIG. 5 is a conceptual explanatory view of a nano-size hollow particle according to an embodiment of the invention, where (A) illustrates a cross-sectional structure and (B) is an SEM image showing an internal structure of a nano-size hollow particle. The nano-size hollow particles have been described as the nano-size hollow particles 40.

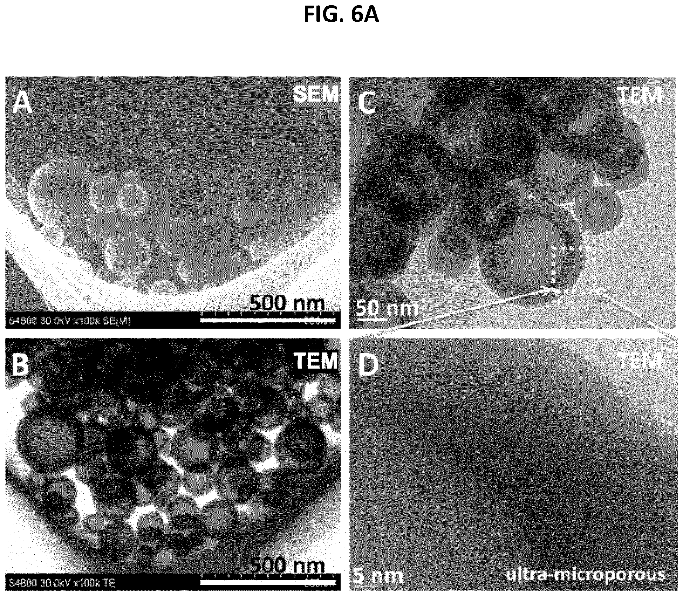

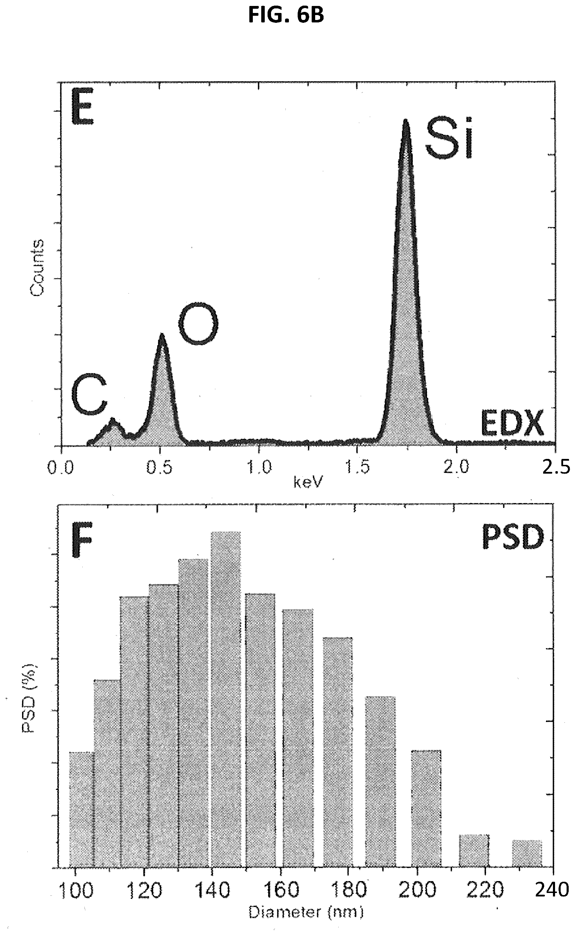

FIG. 6A is an explanatory view of nano-size hollow particles according to an embodiment of the invention, where (A) is an SEM image, (B) is a TEM image, (C) is a magnified TEM image of (B), and (D) is a magnified TEM image of (C) showing a detailed membrane structure of a nano-size hollow particle.

FIG. 6B is an explanatory diagram of nano-size hollow particle according to an embodiment of the invention, where (E) is an EDX spectrum showing elemental composition and (F) shows particle size distribution (PSD). The elemental composition of the nano-size hollow particles are Si as the main component, O and a trace level of C. C is contained due to the carbon coating required for SEM and EDX measurements, which improves conductivity of a sample under analysis. The diameter of the nano-size hollow particle has a peak value of 140 nm and is binomially distributed in the range of 100 nm to 240 nm.

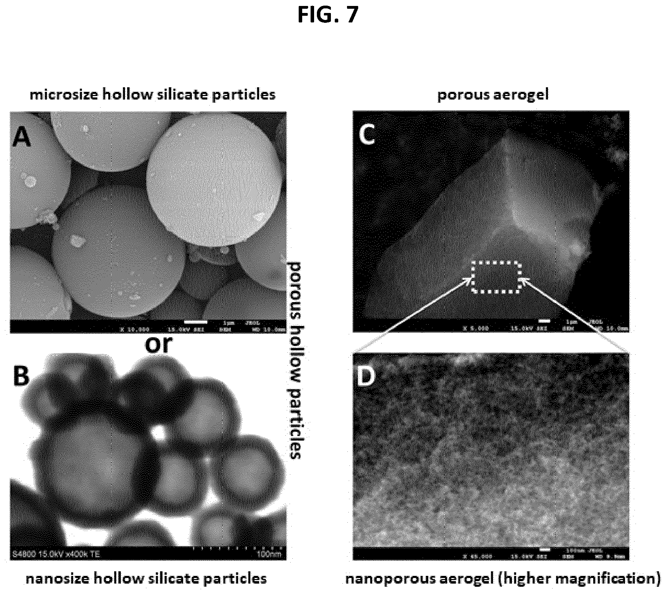

FIG. 7 illustrates images of hollow particles according to an embodiment of the invention, where (A) is an SEM image of micro-size hollow particles, (B) is a TEM image of nano-size hollow particles, (C) is an SEM image of a porous aerogel, and (D) is a magnified SEM image of (C) showing a detailed structure of a porous aerogel.

As shown in Table 3, the density of the micro-size hollow particles is 0.23 g/cm³ to 2.65 g/cm³, the density of the nano-size hollow particles is 0.32 g/cm³ to 2.65 g/cm³, and the density of the entire aerogel is 0.009 g/cm³ to 0.220 g/cm³. The density of the hybrid aerogel of the invention is in the same range of to about half the density of the conventional aerogel (AZO Materials), which is 0.0011 g/cm³ to 0.5 g/cm³.

**Table 3**

| Density (g/cm³) | | | | | | |
|---|---|---|---|---|---|---|
| Micro-size hollow particle | | Nano-size hollow particle | | Hybrid aerogel | | Typical aerogel (Ref: AZO materials) |
| Min | Max | Min | Max | Min | Max | |
| 0.23466733 | 2.65 | 0.31763961 | 2.65 | 0.00885 | 0.22009 | 0.0011∼0.5 |

FIG. 8 illustrates heat transfer of an aerogel, where FIG. 8A illustrates a case in which no hollow particle is included in an aerogel, FIG. 8B illustrates a case in which nano-size hollow particles are included in a hybridized aerogel, and FIG. 8C illustrates a case in which CO₂-filled nano-size hollow particles are included in a hybridized aerogel.

In a conventional aerogel base material, as illustrated in FIG. 8A, pores communicate with each other without exception since such matrices are formed through replacement of a part that is originally a liquid phase with a gas phase. Therefore, conventional aerogel matrices have an essential problem that inter-pore gas flows can cause heat transfer.

In the invention, in contrast, as illustrated in FIGS. 8B and 8C, communicating pores in the aerogel are blocked by the hollow particles. Regarding the pores in the network structure (porous structure) where the hollow particles are aerogel silica fine particles, solid heat transfer caused by the pores can be decreased by blocking the communicating pores by the hollow particles. Since spherical cavity volumes of the hollow particles are small, heat transfer caused by gas flows can be kept less.

Further effects will be described in addition to those of the hollow particles noted above. The surface of the hollow particle is covered airtight with a shell so that the gas enclosed in the cavity inside the hollow particle can be retained. When an aerogel is used in usual atmosphere, the gas inside of the communicating pores is the atmosphere without exception. In contrast, when airtight hollow particles are used, gas prefilled in the hollow particles can be retained. In the new structure consisting of a solid skeleton and two types of pores (communicating pores and spherical cavities) formed by dispersing hollow particles in the aerogel, when the hollow particles are filled with gas (Xenon, CO₂, ethylene, etc.) having thermal conductivity lower than that of air, thermal insulation performance of this hybrid aerogel can further be improved.

As a basic knowledge, a general process for producing a silica aerogel will be described.

A silica aerogel is produced by, for example, a sol-gel process or a Stober process.

In the sol-gel process, a solution of a metal alkoxide, as a starting material, is converted into a colloidal solution (sol) through hydrolysis and a polycondensation reaction. By further accelerating the reaction, glass and ceramic are produced via a gel. The sol-gel process, a production method from a liquid phase, has an advantage that raw materials can be mixed homogeneously at a molecular level, and thus it is advantageous of high degree of freedom in composition control.

The Stober process is a process to prepare small glass particles by rapidly reacting a small amount of silicon alkoxide in an ethanol-added alkaline aqueous solution. The particle size can be adjusted by changing the reaction time and the water/silicon ratio. In the conditions for the Stober process, the ethanol/water ratio and the water/silicon ratio are much higher than those in general sol-gel processes. Since the reaction proceeds uniformly in the Stober process, variation in particle size is small.

Next, a process for producing a hybridized aerogel will be described.

FIG. 9A is a diagram illustrating a process for producing a hybridized aerogel.

Silicon alkoxide or water glass (sodium silicate) as a precursor is first prepared (S 100). An inorganic silica aerogel is traditionally produced through hydrolysis and condensation of a silica-based alkoxide (e.g., tetraethoxylsilane) or through gelation of silicic acid or water glass. Other relevant inorganic precursor materials for silica-based aerogel compositions may include, but not limited to, metal silicates such as sodium or potassium silicates, alkoxysilane, partially hydrolyzed alkoxysilane, tetraethoxylsilane (TEOS), partially hydrolyzed TEOS, condensation polymer of TEOS, tetramethoxylsilane (TMOS), partially hydrolyzed TMOS, condensation polymer of TMOS, tetra-n-propoxysilane, partially hydrolyzed tetra-n-propoxysilane and/or condensation polymer of tetra-n-propoxysilane, polyethylsilicate, partially hydrolyzed polyethylsilicate, monomeric alkylalkoxysilane, bis-trialkoxyalkyl or arylsilane, polyhedral silsesquioxane, or combinations thereof.

The inorganic aerogel here is generally formed from a metal oxide or a metal alkoxide material. A metal oxide or a metal alkoxide material can be based on an oxide or an alkoxide of any metal capable of forming an oxide. Such metal may include, but not limited to, silicon, aluminum, titanium, zirconium, hafnium, yttrium, vanadium and cerium.

Next, micro-size hollow particles, nano-size hollow particles, or a mixture of micro-size hollow particles and nano-size hollow particles 40 are prepared as hollow particles (S 110).

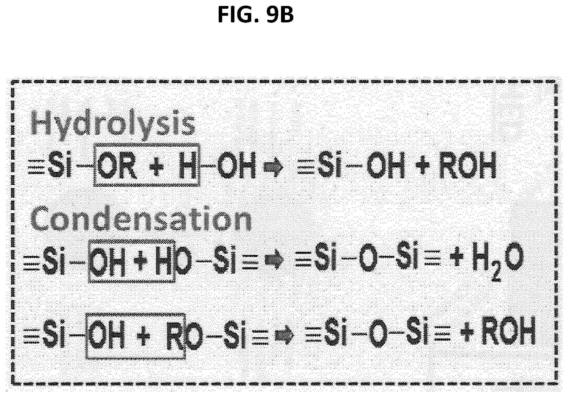

Then, the precursor and the hollow particles are dissolved in a solvent to prepare a colloidal solution (sol) (S120). The solvent may be, for example, methanol. Hydrolysis and polycondensation reactions proceed in the sol-gel process. FIG. 9B is a diagram illustrating a hydrolysis reaction and a polycondensation reaction to silicon alkoxide in the sol-gel process. An acid catalyst may be used to promote the hydrolysis reaction. When an acid catalysis is used, hydrolysis is caused by an electrophilic reaction. H₃O+ in the solution attacks oxygen in the alkoxyl group (-OR; R=CnH₂ₙ₊₁) to form SiOR into SiOH. R+ generated as a result of broken bonds is bonded with HO- to produce alcohol as a by-product. Since the alkoxyl group and H₂O decrease as the reaction proceeds, the rate of hydrolysis reaction rate is decreased gradually. Because a polycondensation reaction is started simultaneously with the hydrolysis reaction, the formed Si(OC₂H₅)₃(OH) undergoes dehydration polycondensation with the surrounding Si(OC₂H₅)₃(OH).

As the dehydration polycondensation reaction of the sol proceeds, the resulting siloxane polymers become linear chain-like structures. The siloxane polymers entangle together to form a three-dimensional network structure, hindering themselves from move around. Therefore, a gel with no fluidity is produced (S130). The sole use of the acid catalyst (excluding hydrofluoric acid) tends to form a gel with low reactivity and low density. Such a gel requires longer time before gelation and the resulting gel contains a large amount of H₂O and alcohol as by-products.

Through a drying process of the gel, a hybridized aerogel is completed (S140). Supercritical drying using carbon dioxide, for example, is used for the drying process. Carbon dioxide is often used as a supercritical fluid. Carbon dioxide reaches a supercritical condition under the following conditions: at a critical temperature of 3 1. 1°C and a critical pressure of 7.38 MPa, which are less strict than those for water. In addition, since supercritical carbon dioxide has high solubility and evaporates and scatters when left at or below a critical point, it is possible to take only a dry sample out.

Ambient pressure drying (APD) may be used instead of supercritical drying. When an aerogel is produced by APD, it may be called a silica xerogel instead.

### Production of Micro-Size Hollow Particles

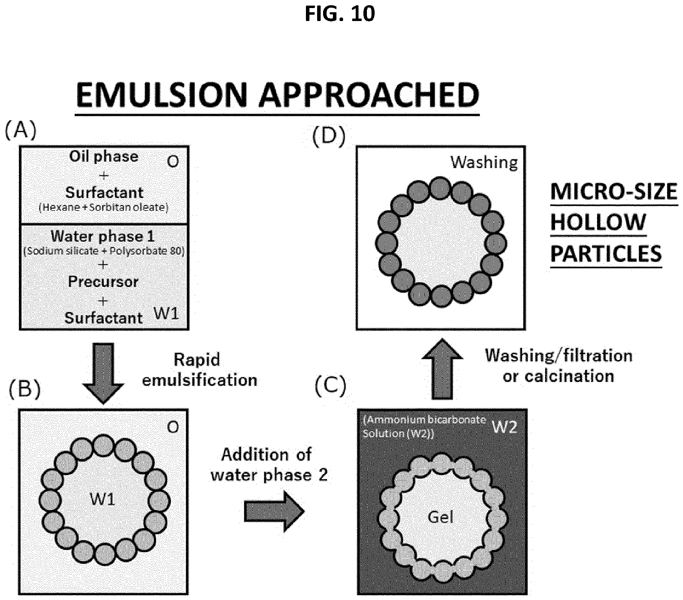

FIG. 10 is a diagram illustrating a process for producing micro-size hollow particles by a double emulsion method. Micro-size hollow particles (MHSPs) are double emulsion prepared by an interfacial reaction.

Double emulsion is defined simply as emulsion within emulsion. Emulsion is a dispersed multiphase system consisting of at least two immiscible liquids. The liquid that forms droplets is called a dispersed phase and most of the liquid surrounding the droplets is called a continuous phase. Double emulsion can be considered as a system in which two liquids are separated by a third liquid that is immiscible with the first two liquids. In the case of water and oil, there are two possible cases of double emulsion: water-in-oil-in-water (w/o/w) emulsion and oil-in-water-in-oil (o/w/o) emulsion. In the case of water-in-oil-in-water (w/o/w) emulsion, for example, each of the dispersed water droplets forms a vesicular structure, with separate single or multiple aqueous compartments forming a continuous aqueous phase layered by an oil phase.

### Production of Nano-Size Hollow Particles

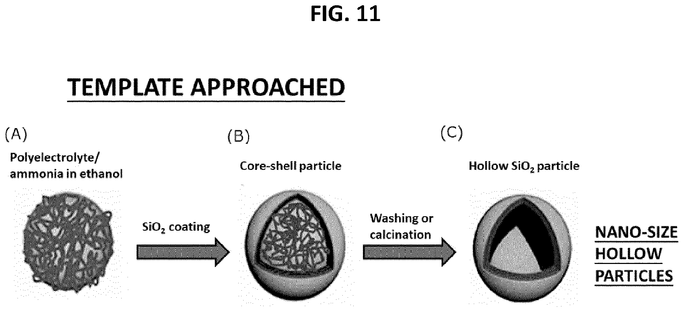

FIG. 11 is a diagram illustrating a process for producing nano-size hollow particles by a soft-template method.

Nano-size hollow particles (NHSPs) are prepared by a soft-template method.

The soft-template method is used to produce porous materials such as nanoporous materials, mesoporous materials and macroporous materials or nanomaterials such as nanospheres, nanorods and nanosheets by using a soft matter such as micelle, emulsion, liposome, polymer blend and liquid crystal as a template. In a hard-template method, in contrast, solid materials such as particles or zeolite are used as templates.

### Examples

Examples of the hybridized aerogel according to the invention will be described.

### Production of Micro-Size Hollow Particles

Here, parameters of a sodium silicate solution (29.9 g silicon, 144 mmol) are fixed. The total volume of the solution was fixed at 36 mL as an aqueous phase 1 (W1). W1 was added to an oil phase (O1) consisting of a 72 mL of n-hexane solution containing 1.00 g of Tween(TM) 80 and 0.50 g of Span(TM) 80. The resulting two-phase solution (W1/O1) was homogenized using a homogenizer (max. 8000 rpm, 1 minute) to produce W1/O1 emulsion. The W1/O1 emulsion was immediately poured while stirring into an aqueous ammonium bicarbonate solution (2 mol·L⁻¹; 250 mL) as a precipitant for the aqueous phase (W2).

Here, Tween(TM) 80 is also called "Polysorbate 80" or "Polyoxyethylene (20) sorbitan monooleate" whose chemical formula is C₆₄H₁₂₄O₂₆. Tween(TM) 80 is a nonionic surfactant and emulsifier commonly used in food and cosmetics, and is a viscous, water-soluble, yellow liquid. Span(TM) 80 is also called Sorbitan monooleate, whose chemical formula is C₂₄H₄₄O₆, and is a surfactant composed of a series of sorbitan esters. Span(TM) 80 is obtained by esterification of one or more sorbitan hydroxyl groups with fatty acids and is hydrophobic in nature.

After 2 hours of stirring, the W1/O1/W2 solution formed white colloidal suspension. Then the W1/O1/W2-colloidal solution was filtered, washed with deionized water/ethanol, vacuum dried at 120°C for 24 hours, and calcined at 400°C to remove excess surfactant. At the same time, micro-size hollow particles (MHSPs) polymerized in powder form were calcined (note: concentrations of sodium silicate, the precipitant and the surfactant in W1, W2 and O1 were unchanged.) The molar ratio of the precipitant to sodium silicate was fixed at 3.5 (precipitant/sodium silicate). W1 and W2 were unchanged (W1/W2=1/7).

### Production of Nano-Size Hollow Particles

Here, a water-based polyelectrolyte such as 40% by weight (wt%) of sodium polymethacrylate (NaPMA) was used as a template agent in an aqueous solution in combination with the catalyzed Stober process as the base. First, 0.40 g of NaPMA (MW^{~}4,000-6,000) is dissolved in 4.5 mL of ammonium hydroxide (NH₄OH, MW^{~}35.05, 28%, reagent grade). Then 90 mL of ethanol (EtOH, MW^{~}46.07) is added to the mixture. As aliquots, five equal portions of tetraethylorthosilicate (TEOS, MW^{~}208.33, 98%, reagent grade) are prepared. 1.80 mL of TEOS was added in portions over 5 hours while vigorously magnetic stirring at ambient temperature.

After 10 hours of aging period, obtained was white colloidal suspension containing approximately 0.92% by weight of silicate particles in the solution. Removal of NH₄OH and promotion of shell stability of defined silicate particles were performed by stirring the solution in an open beaker. The colloidal suspension was filtered, and washed three times with deionized water to remove aqueous polymers.

### Enclosure of Gas in Hollow Parts of Particles

In the producing process of both the micro-size hollow particles (MHSPs) and the nano-size hollow particles (NHSPs), after filtering and washing, colloidal suspension was dried at 120°C for 24 hours and then calcined at 400°C to remove aqueous polymer and excess surfactant removal. In this manner, powdered MHSPs and NHSPs were completed by calcination. When drying and calcination were conducted under any required gas environment, any type of gas can be placed inside MHSPs and NHSPs.

### Production of Aerogel with Micro-Size Hollow Particles and Nano-Size Hollow Particles Mixed

As illustrated in FIG. 9A, a silica aerogel is produced in two main steps: formation of a wet gel by sol-gel chemistry and drying of the wet gel. A wet gel consists of a nanostructured solid network of silica and a liquid solvent formed by hydrolysis and condensation of silica precursor molecules.

A hybrid aerogel precursor was prepared from a mixture of hollow particles, methanol and TEOS. The hollow particles were mixed with methanol and then ultrasonic vibration was conducted for better dispersion of the hollow particles. TEOS was then added to the methanol/hollow particle solution. A total of 6.3 g of oxalic acid (0.01 M) was added to the solution. Finally, 1.5 g of NH₄OH (0.5 M) was added to the mixed solution. This mixed solution, also called alcosol, was kept at ambient temperature to allow gelation to occur. After gelation was finished, alcogel was aged in methanol at 60°C for 12 hours. An excess amount of methanol was added over the gel in consideration of evaporation during drying at elevated temperatures.

Methanol in the alcogel was replaced with a non-polar solvent (hexane). In this step, the alcogel was soaked in hexane at 60°C for 10 hours. Hexane was replaced with hexane/TMCS for surface modification. TMCS is an abbreviation for trimethylchlorosilane, the chemical formula of which is (CH₃)₃SiCl, whose Japanese name is chlorotrimethylsilane.

The volume ratio of hexane/TMCS was kept constant at 4. In the surface modification step, the alcogel was soaked in the hexane/TMCS solution at 60°C for 24 hours. Before drying the alcogel, the sample was soaked in pure hexane to remove the excess TMCS solvent at 60°C for 6 hours. The final step of aerogel synthesis is drying, and the drying conditions are as shown in Table 4.

**Table 4**

| | Step 1 | Step 2 | Step 3 | Cooling |
|---|---|---|---|---|
| Temperature (°C) | 40 | 80 | 120 | Furnace Cooled |
| Holding Time (hrs) | 4 | 2 | 1 | |

Next, the properties of the thus produced nano-size hollow particles will be described.

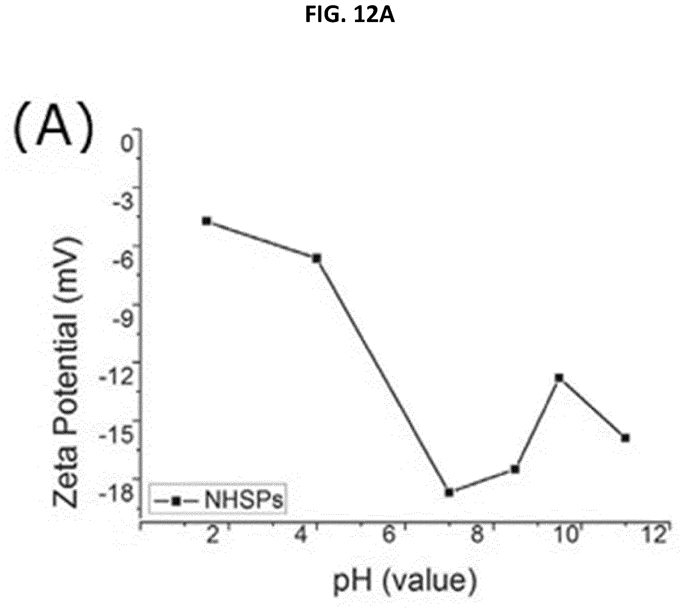

FIG. 12A is a diagram illustrating zeta potential of nano-size hollow particles according to an embodiment of the invention. The zeta potential becomes the minimum of -18 mV at pH 7. The zeta potential on the acidic side becomes the maximum of -4.5 mV at pH 2. The zeta potential on the alkaline side becomes an intermediate maximum of -12 mV at pH 10.

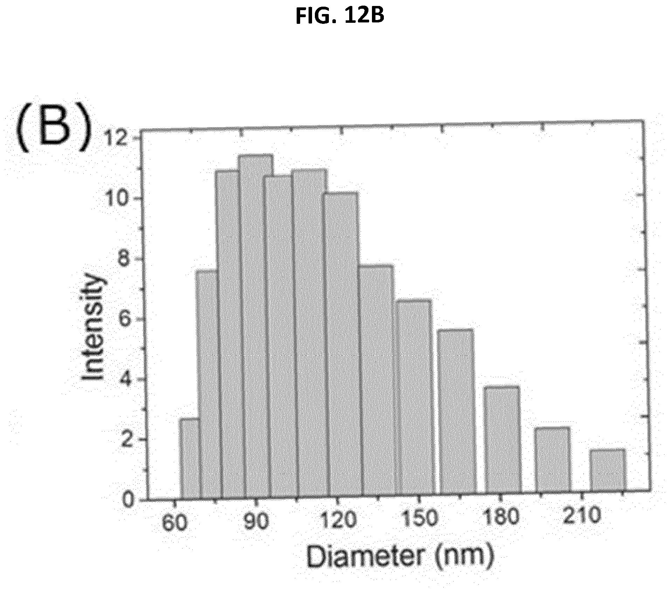

FIG. 12B is a diagram illustrating particle size distribution (PSD) of nano-size hollow particles according to an embodiment of the invention. The particle size is convexly distributed in the range of 60 nm to 220 nm with the median maximum at 90 nm.

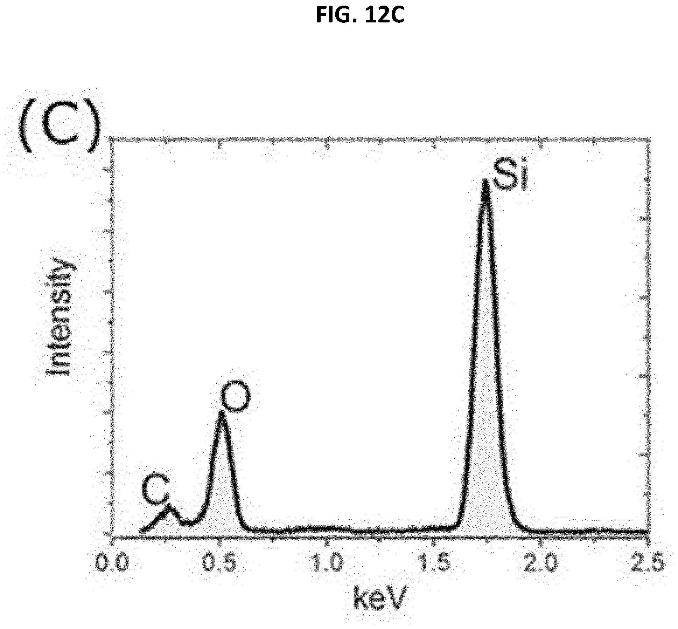

FIG. 12C is an EDX spectrum showing elemental composition of nano-size hollow particles according to an embodiment of the invention. The elemental composition of the nano-size hollow particles are Si as the main component, O and a trace level of C.

Next, effects of the size of the communicating pores of the base material and the size of the spherical cavities of the hollow particles will be described. In a free space, gas molecules are moving while colliding with one another. A distance in which a gas molecule can travel straight without colliding with other molecules is called its free path. Each gas molecule has a known average distance it can travel straight without colliding with other molecules at a certain temperature and pressure, which is called a mean free path. Although gas flows cause heat transfer, gas enclosed in a closed space smaller than the mean free path can transfers less heat caused by flowing. Therefore, it is known that the gas enclosed in a closed space smaller than the mean free path behaves as gas molecules having higher thermal insulation performance than those in a free space. Since gas molecules as the highly thermal insulation performance gas collide more frequently in spaces of the size of the mean free path of their own, a higher thermal insulation effect can be exhibited as the closed space becomes smaller. Therefore, hollow particles with small closed spaces may become excellent thermal insulation materials with little heat transfer caused by gas flows in the spherical cavities. In order to form hollow particles, however, shells are necessary as outer walls. If the shell thickness is great with respect to the spherical cavities, solid-state transfer will impair the thermal insulation performance. The optimum shape of the hollow particle will be determined in consideration of these both effects.

FIG. 13 shows comparison in thermal conductivity of the hybridized aerogel according to an embodiment of the invention in four aspects: an aerogel alone; a mixture of an aerogel and micro-size hollow particles; a mixture of an aerogel and nano-size hollow particles with the gas inside the nano-size hollow particles being air; and a mixture of an aerogel and nano-size hollow particles with the gas inside the nano-size hollow particles being CO₂.

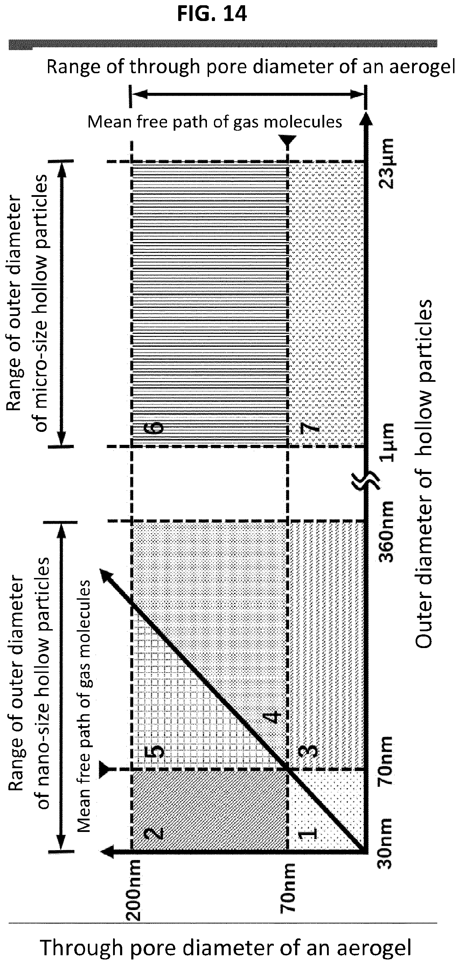

In the hybridized aerogel according to the embodiment, when solid transfer is to be reduced, the pore volume increases, and when the pores are communicating pores, heat transfer caused by gas flow increases heat transfer of the entire aerogel. This impairs thermal insulation performance of the aerogel. Further, a structure with all or a part of the communicating pores replaced with spherical cavities has further improved thermal insulation performance compared to a structure only with communicating pores. Here, the effect of improving thermal insulation performance by introducing the hollow particles differs depending on the size of the communicating pores of the original aerogel base material. FIG. 14 will be referred to in order to explain this relationship.

In FIG. 14, the vertical axis indicates the communicating pore size, and the horizontal axis indicates the spherical cavity size. If the size of the communicating pores in the aerogel base material is regarded to be as small as the mean free path of the gas molecules, the aerogel base material itself already has a thermal insulation effect by restricting the movement of the gas molecules. Therefore, effects of introduction of hollow particles are limited. Besides, if the size of the communicating pores in the aerogel base material is so large that introduction of the hollow particles cannot close the communicating pores, effects of introduction of the hollow particles cannot be expected. Therefore, among the three zones (1-2, 3-4-5, 6-7) extending in the left and right in FIG. 14, the left and right zones (1-2, 6-7) are ones in which effects of introduction of the hollow particles are limited. The vertical axis focuses on the cavity size of the hollow particles. Hollow particles of a diameter close to the mean free path can be expected to have thermal insulation performance as spherical cavities. In this case, the cavity size zone from twice to half the mean free path is where the spherical cavities of the hollow particles is highly effective. Zones greater than these cavity size are less effective because the size limiting effect is reduced in zones over twice the mean free path. The cavity size is set to half the mean free path is not because of the pore size, but because of a secondary effect that the effect of solid heat transfer caused by the shells becomes noticeable. The lower zones are also less effective because the relatively large volume of the shells to form the pores impairs thermal insulation performance of the entire hybrid aerogel. In conclusion, in the hybrid aerogel structure, the central zone in both horizontal and vertical directions has the highest effect of introduction of hollow particles.

Further effects of hollow particles will be described. Since the hollow particles have an airtight structure through which gas cannot pass, the gas filled in the cavities of the hollow particles can be retained as it is. When an aerogel is used in usual atmosphere, the gas inside of the communicating pores is the atmosphere without exception. In contrast, when airtight hollow particles are used, gas prefilled in the hollow particles can be retained. When the hollow particles are filled with CO₂ (carbon dioxide), a gas known to have low thermal conductivity, thermal insulation performance of the hybrid aerogel can further be improved.

According to the hybrid aerogel of the invention, sound waves entering the hollow parts of the particles reflect repeatedly on inner wall surfaces of the particle for quick dissipation of energy. Therefore, the hybridized aerogel of the invention can be used as a sound absorbing material.

The heat insulation technology using the hybrid aerogel of the invention is a technology that can realize, with a solid (hybrid aerogel) of a thermal insulation material, high thermal insulation performance that have only been achieved by vacuum insulation. Problems of vacuum insulation are as follows: severe limitation on production of its insulation structure; expensiveness; and short duration that thermal insulation performance deteriorates significantly as the vacuum is damaged. Particularly since a vacuum structure collapses at atmospheric pressure, vacuum insulation has been extremely difficult to use. The technology of the invention provides performance comparable to that of vacuum insulation while employing usual filling methods of thermal insulation materials. The economic effect is important in the following two respects. First is the effect of reducing the producing cost of the thermal insulation material and the producing equipment cost. Second is the effect of reducing maintenance and operation costs, such as the energy saving effect, by improving thermal insulation performance. This is because not only of energy reduction effects of heating and cooling will be reduced, but also of unnecessity of pumps that may be used in vacuum insulation.

As a result of thermal conductivity measurement, when hollow particles are added, the thermal conductivity of the hybrid aerogel decreases from 13.4 mW/m·K when the hollow particles are not included. In the case of micro-size hollow particles of 8 µm in an average outer diameter, the thermal conductivity was 11.8 mW/m·K when the content was 0.1% by weight. In the case of air-filled nano-size hollow particles of 120 nm in an average outer diameter, the thermal conductivity was 10.4 mW/m·K when the content was 0.1% by weight. In the case of CO₂-filled nano-size hollow particles of 120 nm in an average outer diameter, the minimum value of the measured thermal conductivity of 9.6 mW/m·K was very close to the value 8.0 mW/m·K of the vacuum insulated panel.

### Industrial Applicability

According to the hybrid aerogel of the invention, it is possible to provide a long-life solid thermal insulation material with highly thermal insulation performance comparable to that of vacuum insulated panels, and with high stability not to collapse even when pressure nearly the size of atmospheric pressure acts thereon. Therefore, a practical effect thereof as thermal insulation material parts is significant. More particularly, when the hybrid aerogel of the invention is to be used as a thermal insulation material where a vacuum pump is used for vacuum insulation, necessary thermal insulation performance can be achieved without using a vacuum pump. Therefore, the invention has expanded industrial applicability.

### EXPLANATION OF SIGN

10 Silica fine particles
20 Pores in network structure (porous structure)
30 Micro-size hollow particles
40 Nano-size hollow particles

## Claims

1. A hybrid aerogel in which at least one of nano-size hollow particles and micro-size hollow particles are mixed into an aerogel having a network structure created by bonded secondary particles of a metal oxide with pores formed among the secondary particles, wherein
the nano-size hollow particles each includes a shell of 30 nm or more and 360 nm or less in outer diameter and a cavity inside, and
the micro-size hollow particles each includes a shell of 1 µm or more and 23 µm or less in outer diameter and a cavity inside.

2. The hybrid aerogel according to claim 1, wherein
the nano-size hollow particles are 0.01% by weight or more and 30% by weight or less, and the balance consists of the aerogel.

3. The hybrid aerogel according to claim 1, wherein
the micro-size hollow particles are 0.01% by weight or more and 30% by weight or less, and the balance consists of the aerogel.

4. The hybrid aerogel according to claim 1, wherein cavities in the nano-size hollow particles and/or cavities in the micro-size hollow particles are filled with gas having thermal conductivity lower than that of air.

5. The hybrid aerogel according to claim 4, wherein
when the nano-size hollow particles are included, the composition ratio thereof is 0.01% by weight or more and 30% by weight or less, and
when the micro-size hollow particles are included, the composition ratio thereof is 0.01% by weight or more and 30% by weight or less; and
the balance consists of the aerogel.

6. The hybrid aerogel according to claim 4, wherein
when the nano-size hollow particles are included, the composition ratio thereof is 0.00003% by volume or more and 17.6% by volume or less, and
when the micro-size hollow particles are included, the composition ratio thereof is 0.00003% by volume or more and 22% by volume or less; and
the balance consists of the aerogel.

7. The hybrid aerogel according to any one of claims 1 to 6, wherein metal of the metal oxide is a metal or a combination of metals selected from group consisting of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).

8. A thermal insulation material wherein the hybrid aerogel according to any one of claims 1 to 7 is used.

9. A method for producing hybrid aerogel, the method comprising:
preparing a metal alkoxide as a precursor;
preparing hollow particles of a metal oxide;
preparing a colloidal solution by dissolving the precursor and the hollow particles in a solvent;
preparing a gel by adding an acid catalyst to the colloidal solution to promote a hydrolysis reaction and a polycondensation reaction to the precursor in a sol-gel process; and
drying the gel by supercritical drying using carbon dioxide or atmospheric drying to produce a hybridized aerogel.

10. The method for producing hybrid aerogel according to claim 9, wherein the hollow particles are one of micro-size hollow particles, nano-size hollow particles, and a mixture of micro-size hollow particles and nano-size hollow particles.

11. The method for producing hybrid aerogel according to claim 9 or 10, further comprising replacing the gas inside the spherical cavities of the hollow particles with gas having thermal conductivity lower than that of the atmosphere.

12. The method for producing hybrid aerogel according to any one of claims 9 to 11, wherein metal of the metal alkoxide is- a metal or a combination of metals selected from group consisting of silicon (Si), aluminum (Al), titanium (Ti), zirconium (Zr), hafnium (Hf), yttrium (Y), vanadium (V), cerium (Ce), lanthanum (La), neodymium (Nd), samarium (Sm), praseodymium (Pr), holmium (Ho) and molybdenum (Mo).

13. The method for producing hybrid aerogel according to any one of claims 9 to 11, wherein the metal alkoxide is silicon alkoxide or water glass, and the hollow particles are silica.

14. The method for producing hybrid aerogel according to claim 13, wherein at least one of tetraethoxysilane, trimethoxysilane, tetramethoxysilane, triethoxysilane, tripropoxysilane, tetrapropoxysilane and tributoxysilane is used as the silicon alkoxide.
